# EUROPEAN PATENT APPLICATION

(11) **EP 4 156 228 A1**
(43) Date of publication of application: **29.03.2023**
(21) Application number: 21198491.9
(22) Date of filing: 23.09.2021
(51) Int. Cl.: H01J 49/04, G01N 35/00, G01N 1/38, G01N 30/40, G01N 30/72

(54) **ANALYTICAL SYSTEM AND METHOD**

(71) Applicant: F. Hoffmann-La Roche AG, 4070 Basel (CH); Roche Diagnostics GmbH, 68305 Mannheim (DE); HITACHI HIGH-TECH CORPORATION, Tokyo 1056409 (JP)
(72) Inventor: LANG, Robert, 68305 Mannheim (DE); MITRA, Indranil, 68305 Mannheim (DE); HASHIMOTO, Yuichiro, Minato-ku, Tokyo 1056409 (JP); SUGAWARA, Yuka, Minato-ku, Tokyo 1056409 (JP)
(74) Representative: Altmann Stößel Dick Patentanwälte PartG mbB

(57) **Abstract**

An analytical system (100, 100') comprising a mass spectrometer (60) and an ionization source (61) coupled to the mass spectrometer (60) is herein disclosed. The analytical system (100, 100') further comprises an analytical fluidic system (10, 10') connectable to the ionization source (61) via a downstream valve (20) for infusing samples into the mass spectrometer (60) via the ionization source (61), a downstream pump (40) fluidically connectable to the ionization source (61) via the downstream valve (20), where the downstream pump (40) is fluidically connected to a plurality of fluid containers comprising respective fluids (41, 42, 43, 44), the fluids comprising at least one concentrated composition (44) for calibrating the mass spectrometer (60) and at least one diluent (42, 43) for diluting the at least one concentrated composition (44). The analytical system(100, 100') further comprises a controller (90) configured to control the downstream pump (40) in order to obtain at least one diluted composition (45) by automatically mixing at least one concentrated composition (44) with at least one diluent (42, 43) with a predetermined dilution factor, to infuse the at least one diluted composition (45) into the ionization source (61), to obtain a mass spectrum (62) of the at least one diluted composition (45) and to execute a calibration (63) of the mass spectrometer (60) based on an assessment (64) of the mass spectrum (62). A respective automated analytical method comprising calibration of a mass spectrometer (60), like mass axis check and/or adjustment, with selected chemical compositions is herein also disclosed.

## Description

### Technical Field

The present disclosure is related to an automated analytical system and method comprising calibration of a mass spectrometer, like mass axis check and/or adjustment, with selected chemical compositions.

### Background

In mass spectrometry (MS), proper acquisition of a mass spectrum requires instrument tuning to ensure good sensitivity and peak shape and to ensure that the mass resolution is appropriate for the analytical requirements of the sample. Tuning is followed by mass calibration, including adjusting the m/z scale of the instrument, which is typically performed by measuring a sample generating peaks at known m/z values and adjusting the m/z axis to reflect the expected values if necessary. Furthermore, usually a background spectrum is measured before analyzing a sample to check for contaminants that may be present in the instrument.

Typically and in particular in high-throughput analytical settings, a mass axis check is performed at regular intervals to ensure correct ion identification, and to perform mass axis adjustment if necessary or as a part of routine operation.

Calibration of mass spectrometers has been described, e.g. in US 2018/0047549 A1. Mass axis check and/or adjustment compositions are known in the art as well. E.g. WO 2012/135682 A2 proposes polyethylene compounds and mixtures thereof; in Zhou et al. (2012, Anal Chem 84:6016) cesium iodide was used for calibration. Further, commercial calibration solutions are available.

Performing mass axis check (MAC) or mass axis adjustment (MAA) typically requires intensive and experienced/qualified user interaction and several manual steps, which is inconvenient and inappropriate for clinical applications of a mass spectrometer. Such manual steps might comprise, ensuring that the correct calibration solution is used, manual preparation of the solution, including handling of volatile and toxic solvents such as methanol, hardware modification, e.g. in order to infuse the calibration solution into the mass spectrometer, manual starting and execution of the procedure step by step, including assessment and eventual adjustments, with risks of errors, injuries, contamination and system damage.

If the mass spectrometer is coupled to an analytical fluidic system, such as a liquid chromatography (LC) system, the fluidic system typically also requires frequent maintenance and quality control procedures.

In particular, HPLC columns, may undergo continuous deterioration of their performance as the number of sample injections increases, resulting e.g. in increasing background, shifting of retention times, shortened column lifetime, increased costs, and need for frequent maintenance, mostly due to particulate build-up at the column head.

Backflushing an HPLC column can provide higher sample throughput, more uptime, less maintenance, lower costs, higher data quality, and longer lasting calibrations. This is typically done by manually disconnecting the column from the flow system and reconnecting the outlet side of the column to the flow inlet such as to reverse the flow direction through the column, whereas the flow out of the column is typically directed to waste in order not to contaminate the detector. This manual procedure may take 15-20 min or more for each column before the column is reconnected in the original orientation with the correct flow direction, followed by re-equilibration and quality control.

This manual procedure can be also laborious, time consuming, and require the intervention of external service personnel or of skilled laboratory personnel, during which time an analyzer or component thereof might not be available for use, besides generating additional costs and introducing a risk of errors and malfunctions and even of system damage.

Moreover, for high-throughput applications requiring many consecutive sample injection cycles, and especially for random-access analysis of different samples possibly requiring different injection conditions and different LC separation conditions, high flexibility and speed in quickly changing and adapting the conditions for each sample in a scheduled sequence, can be important.

In particular, it may be necessary to frequently exchange solvent/eluent used for the LC separations within the same fluidic stream and between parallel fluidic streams. Due to the nature of pump action, to internal dead volumes, and fluidic and surface effects, liquid exchange is a process of repeated dilution of the previously used liquid by the newly used liquid, possibly resulting in long equilibration and signal stabilization times. This process therefore may present a bottleneck if the goal is to achieve high-throughput random-access sample processing, in particular if the goal is to maintain a regular pace of sample injection and analysis regardless of the sample sequence and separation/analysis conditions.

### General Description

It is against the above background that the embodiments of the present disclosure provide certain unobvious advantages and advancements over the prior art. In particular, the inventors have recognized a need for improvements in automated analytical systems comprising a mass spectrometer and methods, including calibration of a mass spectrometer.

Although the embodiments of the present disclosure are not limited to specific advantages or functionality, it is noted that the present disclosure provides an analytical system comprising a mass spectrometer and an automated analytical method involving use of a mass spectrometer, which enable, among other functions, automated calibration of the mass spectrometer, thereby ensuring continued analytical performance of the system, without manual intervention and hence with increased user convenience. Other advantages are that system downtime is minimized, while risks of errors, malfunctions and system damage are eliminated. Also, the risk of injuries or health hazards are minimized. This is achieved primarily by using a downstream pump, coupled to a mixing unit, that comprises at least the function of diluting a concentrated calibration solution (composition) as needed and infusing the diluted composition into the mass spectrometer while bypassing any analytical fluidic system. By having this function integrated into the analytical system, it is possible to make use of one or more standardized and optimized compositions in concentrated form, that the analytical system can automatically choose from and/or combine, according to the need, e.g. based on particular m/z ranges of a given mass spectrometer, based on the ionization mode, on the sensitivity of the mass spectrometer and the like. Using prepared concentrated compositions, that can be made commercially available, besides removing the inconvenience of manual preparation and the risks mentioned above, enables to have onboard a broader choice of compositions (occupying less space) and also to use lower solvent amounts in the compositions, where the solvent is typically volatile, flammable, and of health and environmental concern, thereby reducing the risk of handling, but also preparing, stocking and transporting such solutions. In particular, since such solvents are typically used anyway for analytical reasons in applications involving the use of mass spectrometry and/or liquid chromatography or other chromatographic techniques coupled to mass spectrometry, and are therefore also present onboard the analytical system, it is convenient to use these also for diluting the concentrated calibration compositions, as and when they are needed and in the amount needed. Moreover, according to an embodiment, it is possible to flexibly, dynamically and automatically adapt the calibration conditions in case of failure or anticipated failure of calibration by e.g. adapting the dilution factor.

In particular, the analytical system comprises a mass spectrometer and an ionization source coupled to the mass spectrometer, an analytical fluidic system connectable to the ionization source via a downstream valve for infusing samples into the mass spectrometer via the ionization source and a downstream pump fluidically connectable to the ionization source via the downstream valve. The downstream pump is fluidically connected to a plurality of fluid containers comprising respective fluids, the fluids comprising at least one concentrated composition for calibrating the mass spectrometer and at least one diluent for diluting the at least one concentrated composition, a controller configured to control the downstream pump in order to obtain at least one diluted composition by automatically mixing at least one concentrated composition with at least one diluent, to infuse the at least one diluted composition into the ionization source, to obtain a mass spectrum of the at least one diluted composition and to execute a calibration of the mass spectrometer based on an assessment of the mass spectrum.

An "analytical system" is an automated laboratory apparatus dedicated to the analysis of samples, possibly for in vitro diagnostics. The analytical system may have different configurations according to the need and/or according to the desired laboratory workflow. Additional configurations may be obtained by coupling a plurality of apparatuses and/or modules together. A "module" is a work cell, typically smaller in size than the entire analytical system, which has a dedicated function. This function can be analytical but can also be pre-analytical or post-analytical, or it can be an auxiliary function to any of the pre-analytical function, analytical function or post-analytical function. In particular, a module can be configured to cooperate with one or more other modules for carrying out dedicated tasks of a sample processing workflow, e.g., by performing one or more pre-analytical and/or analytical and/or post-analytical steps. Thus, the analytical system may comprise one analytical apparatus or a combination of any of such analytical apparatuses with respective workflows, where pre-analytical and/or post analytical modules may be coupled to individual analytical apparatuses or be shared by a plurality of analytical apparatuses. Alternatively, pre-analytical and/or post-analytical functions may be performed by units integrated in an analytical apparatus. The analytical system can comprise functional units such as liquid handling units for pipetting and/or pumping and/or mixing of samples and/or reagents and/or system fluids, and also functional units for sorting, storing, transporting, identifying, separating, and detecting analytes in samples. In particular, the analytical system may comprise an analytical fluidic system or module or module, a mass spectrometer (MS) system or module, and an ionization source (IS) system or module as an interface between the analytical fluidic system and the mass spectrometer, either distinguishable as individual and exchangeable units coupled to each other or at least in part integrated into a common system housing.

A "mass spectrometer (MS)" is an analytical module comprising a mass analyzer designed to further separate and/or detect analytes based on their mass to charge ratio. According to an embodiment, the mass spectrometer is a fast scanning mass spectrometer. According to an embodiment, the mass spectrometer is a tandem mass spectrometer capable of selecting parent molecular ions, generating fragments by collision-induced fragmentation, and separating the fragments or daughter ions according to their mass to charge (m/z) ratio. According to an embodiment, the mass spectrometer is a single or triple quadrupole mass spectrometer, as known in the art. Besides quadrupoles, other types of mass analyzers may be used as well, including time of flight, ion trap or combinations thereof.

An "ionization source (IS)" is an interface coupling the analytical fluidic system to MS, configured to generate charged analyte molecules (molecular ions) and transferring the charged analyte molecules from a liquid into a gas phase. According to certain embodiments, the ionization source is an electro-spray-ionization (ESI) source, or a heated-electrospray-ionization (HESI) source, or an atmospheric-pressure-chemical-ionization (APCI) source, or an atmospheric-pressure-photo-ionization (APPI) or an atmospheric-pressure-laser-ionization (APLI) source. The interface may comprise however a double ionization source, e.g., both an ESI and an APCI source, or a modular exchangeable ionization source.

Typical parts of an ionization source are a nebulizer and a sampling capillary, typically arranged orthogonally or coaxially with respect to each other. An LC eluate exiting an LC channel is guided through a probe including a sprayer needle. In this manner, the LC eluate is nebulized in a volume downstream of the sprayer needle where ionization takes place and the charged analyte molecules thereby obtained are brought into a gaseous phase. A sampling device (e.g., a sampling capillary) is provided to collect the ions in the gaseous phase and guide them into the mass spectrometer.

The ionization source may further include an assembly to provide a curtain gas (e.g., N2) which reduces the entry of background ions (e.g., solvent clusters) into the MS. The assembly can have a curtain plate and an orifice assembly for providing the curtain gas. The ionization source may further include a supply of an auxiliary gas and a nebulizer gas.

In order to optimize ionization conditions, it is also possible to adjust solvent composition by adding a make-up flow directly before the ionization source to adjust pH, salts, buffers or organic content.

Such ionization sources are known in the art and not further elucidated here.

As used herein, the term "controller" can mean a processing unit, such as a microprocessor, a microcontroller, a reduced instruction circuit (RISC), an application specific integrated circuit (ASIC), a logic circuit, and any other circuit or processor capable of executing the functions/methods described herein, and in particular configured to control the downstream pump in order to obtain at least one diluted composition by automatically mixing at least one concentrated composition with at least one diluent, to infuse the at least one diluted composition into the ionization source, to obtain a mass spectrum of the at least one diluted composition and to execute a calibration of the mass spectrometer based on an assessment of the mass spectrum.

The controller may be integrated into the analytical system or be a separate logic entity in communication with the analytical system via a direct connection, wired or wirelessly, or indirectly over a communications network, wired or wirelessly, such as a wide area network, e.g., the Internet or a Health Care Provider's local area network or intranet, via a network interface device. In some embodiments, the processor might be integral with a data management unit, e.g., implemented on a computing device such as a desktop computer, a laptop, a smartphone, a tablet, PDA, etc. It may include a server computer and/or be distributed/shared across/between a plurality of analytical systems. Moreover, the analytical system can include remote devices, servers and cloud-based elements that communicate via wires or wirelessly (e.g., infrared, cellular, Bluetooth^{®}) with the controller, or a remote PC/server or a cloud-based system. The controller may be also configurable to control the analytical system in a way that workflow(s) and workflow step(s) are conducted by the analytical system.

The term "analytical fluidic system" as used herein refers to any fluidic system comprising at least one fluidic stream and configured to prepare a sample for mass spectrometry and/or to transfer a prepared sample to a mass spectrometer, in particular for separating analytes of interest in a sample before detection by a mass spectrometer.

A "fluidic stream" is a fluidic path through which liquids can flow and in particular through which a sample from a sample injection point can be transferred to the mass spectrometer, and through which the sample may undergo a separation and/or purification process. The fluidic connection through different parts of the fluidic stream may be discontinuous. This is because the fluidic stream may comprise elements such as switching valves that may establish alternative connections and regulate fluidic flow between different parts of the fluidic stream at different times.

According to an embodiment, the fluidic stream may comprise at least one liquid chromatography (LC) column and the analytical fluidic system is or comprises a liquid chromatography (LC) system.

A "liquid chromatographic system or LC system" is an analytical apparatus or module or a unit in an analytical apparatus for carrying out liquid chromatography. The LC system may be embodied as a single channel with one fluidic stream or as a multi-channel system with a plurality of fluidic streams, comprising one or a plurality of LC columns arranged in parallel and/or in series. The LC system may also comprise elements such as a sample injector, valves, liquid sources, fluidic connections and parts, e.g., for mixing liquids, degassing liquids, tempering liquids, and the like, one or more sensors, such as pressure sensors, temperature sensors and the like, and especially at least one LC pump. The list is not exhaustive. The at least one LC column may be exchangeable. In particular, the LC system may comprise more LC columns than fluidic streams, where a plurality of LC columns may be selectable, e.g., interchangeably coupled to the same fluidic stream. Capillary tubing may be also used to bypass LC columns. A fluidic stream may comprise a plurality of substreams.

"Liquid chromatography or LC" is an analytical process that subjects samples injected by a sample injector to chromatographic separation through an LC column in order for example to separate analytes of interest from matrix components, e.g., remaining matrix components after sample preparation that may still interfere with a subsequent detection, e.g., a mass spectrometry detection, and/or in order to separate analytes of interest from each other in order to enable their individual detection. "High-performance liquid chromatography" or HPLC, "ultra-high-performance liquid chromatography" or UHPLC, "micro liquid chromatography" or µLC and "small-bore liquid chromatography" or small-bore LC are forms of liquid chromatography performed under pressure.

An "LC column" may refer to any of a column, a cartridge, a capillary and the like for performing separations of a chromatographic nature. Columns are typically packed or loaded with a stationary phase, through which a mobile phase is pumped in order to trap and/or separate and elute and/or transfer analytes of interest under selected conditions, e.g., according to their polarity or log P value, size or affinity, as generally known. This stationary phase can be particulate or beadlike or a porous monolith. However, the term "column" may also refer to capillaries or channels that are not packed or loaded with a stationary phase, but rely on the surface area of the inner capillary wall or geometrical structures to effect separations. An example is provided by pillar array chromatography, where separation beds are formed by etching away interstitial volumes out of a solid silicon wafer, leaving an array of pillars. The resulting channels can be folded onto a small footprint by concatenating bed segments with optimized flow distributors that limit peak dispersion. This creates a stationary phase support structure that is organized in a reproducible, ordered pattern.

The LC column may be exchangeable and/or operate in parallel or in sequence to one or more other LC columns. An LC column may be for example a rapid trap and elute LC column or "trap-column" for short, a HPLC column or a UHPLC column, and may be of any size, including micro-LC columns and small-bore LC columns, or pillar array LC columns. In the case of trap-columns, a stationary phase can be selected, which retains analytes of interest, whereas any salts, buffer, detergents and other matrix components are unretained and washed away. This process is typically followed by elution of the analytes, e.g., in back flush mode, with a different mobile phase or a solvent gradient. Depending on the analytes, separation of some analytes can be expected in some cases. On the other hand, in case of analytes having identical masses (isobaric) and/or overlapping daughter ion spectra in multiple reaction monitoring (MRM), when it comes to mass spectrometry, a more extensive chromatographic separation could be typical. In that case, separation in a HPLC or UHPLC column may be advantageous.

A "liquid chromatography pump or LC pump" is a high-pressure pump that may vary in pressure capacity but that can yield a consistent and reproducible volumetric flow rate though an LC channel. Pressure in HPLC may typically reach as high as 60 MPa or about 600 atmospheres, whereas UHPLC and µ-LC systems have been developed to work at even higher pressures, e.g., up to 140 MPa or about 1400 atmospheres, and therefore are able to use much smaller particle sizes in the LC columns (<2 µm). LC pumps may be configured as binary pumps or even quaternary pumps, e.g., in case of conditions requiring the use of elution gradients by gradually varying the ratio between up to four elution solvents.

According to one embodiment, the LC pump can yield a pressure of 60 MPa to 140 MPa, typically 75 MPa to 100 MPa, and more typically 80 MPa.

According to one embodiment, the LC pump can be configured to operate with a flow rate between 1 µl/min and 500 µl/min or more, typically up to 1500 µl/min, and more typically operate at flow rates between 100 µl/min to 300 µl/min, and an accuracy of, e.g., about ± 5% or less.

The term "liquid" in relation to a fluidic stream refers to liquids commonly used in liquid chromatography, e.g., as solvents or mixtures of solvents used, e.g., as mobile phases or eluents (elution solvents), and as known in the art.

A "downstream pump" is an auxiliary pump distinguished at least in function from the LC pump, possibly a multi-function pump, including at least the function of diluting a concentrated calibration solution (composition) as needed and infusing the diluted composition into the ionization source while bypassing the analytical fluidic system via the downstream valve. Another possible function is that to connect to the ionization source between two consecutive fluidic streams of the analytical fluidic system in order to wash liquid from a previous fluidic stream out of a conduit between the downstream valve and the ionization source with a wash liquid before liquid from a subsequent fluidic stream enters the conduit, while bypassing the analytical fluidic system via the downstream valve. Another possible function is that to connect to at least one fluidic stream of the analytical fluidic system comprising an HPLC column in order to backflush and thereby clean the HPLC column with a wash liquid, via the downstream valve. In general, the downstream pump is a lower-pressure and higher-volume (higher-flowrate) pump compared to the LC pump, and is fluidically connected to the downstream valve.

Typically, the downstream pump according to the present disclosure is also a lower-precision pump and hence is also simpler in construction and less expensive in comparison to an LC pump. According to an embodiment of the present disclosure the downstream pump is a positive-pressure pump. Any pump suitable to generate a positive-pressure in order to actively pump a wash liquid or mobile phase from a liquid source through the at least one HPLC column in backflush and/or through the valve-to-detector conduit, via the stream-selection valve, may be used, like for example membrane/diaphragm pumps, single-plunger high-speed pumps, syringe-piston pumps, gear pumps and the like. According to an embodiment, positive pressure and active pumping may be achieved by applying pneumatic pressure, e.g., by pressurized gas, e.g., by a nitrogen supply, into a sealed liquid container connected to the upstream inlet valve.

According to an embodiment, the analytical fluidic system comprises a plurality of fluidic streams, where at least one fluid container comprises a wash liquid, and where the controller is further configured to control the downstream pump and the downstream valve to connect to the ionization source between two consecutive fluidic streams in order to wash liquid from a previous fluidic stream out of a conduit between the downstream valve and the ionization source with the wash liquid before liquid from a subsequent fluidic stream enters the conduit.

According to an embodiment, the analytical fluidic system comprises at least one fluidic stream comprising an HPLC column, where at least one fluid container comprises a wash liquid, and where the controller is further configured to control the downstream pump and the downstream valve to connect to the at least one fluidic stream in order to backflush and thereby clean the at least one HPLC column with the wash liquid.

The controller may be configured to automatically backflush the at least one HPLC column at regular intervals and/or upon detection of a pressure rise above a predetermined threshold in the at least one fluidic stream and/or upon detection of performance reduction below a predetermined threshold, by e.g. monitoring data like increase of signal background, shifts in analyte retention times, peak shape alteration and the like during use of the at least one HPLC column.

According to an embodiment, the controller may be configured to manage a fluidic-stream-to-mass-spectrometer connection time, that is the connection time between the at least one fluidic stream and the ionization source, a downstream-pump-to-mass-spectrometer connection time, that is the connection time between the downstream pump and the ionization source, and a downstream-pump-to-fluidic-stream connection time, that is the connection time between the at least one fluidic stream and the downstream pump, by controlling switching of any one or more valves including the downstream valve.

According to an embodiment, the fluidic-stream-to-mass-spectrometer connection time is fixed and is the same for each fluidic stream. In addition, the downstream-pump-to-mass-spectrometer connection time may be fixed, when the downstream pump is used to wash liquid from a previous fluidic stream out of a conduit between the downstream valve and the ionization source, and is a fraction of the fluidic-stream-to-mass-spectrometer connection time, thereby resulting at least temporarily in a continuous switching at a regular pace. It may in particular be beneficial if the downstream-pump-to-mass-spectrometer connection time is 20% or less, typically 10% or less, or more typically 5% or less of the fluidic-stream-to-mass-spectrometer connection time and that the conditions of the downstream pump in terms of, e.g., flow rate and/or washing liquid, are so adapted that the downstream-pump-to-mass-spectrometer connection time is minimized. In absolute terms the downstream-pump-to-mass-spectrometer connection time may be as short as a few seconds, typically 5s or less, more typically 3s or less.

According to an embodiment, the downstream pump is configured to pump a wash liquid through the HPLC column and/or through the conduit between the downstream valve and the ionization source at a flow rate higher than that of the fluidic streams, e.g., several times higher, for example, 5 times, 10 times, 20 times or higher. For example, in case of µ-LC with typical flow rates around 1 µL/min, a wash pump flow rate of 5 µL/min may be already beneficial. In case of flow rates of the fluidic streams around 100 µL/min, effective flow rates for the downstream pump can be around 500 ― 1000 µL/min or higher. According to an embodiment, the flow rate of the fluidic stream is about 440 µL/min and the flow rate of the downstream pump is about 5 to 10 time higher. According to some embodiments, flow rates for the downstream pump up to 5000 µL/min are possible. The flow rate may be variable depending on whether the wash liquid is directed to an HPLC column or to the valve-to-detector conduit. According to an embodiment, the downstream pump is configured to infuse the at least one diluted composition into the ionization source at a flow rate similar to that of the at least one fluidic stream, e.g. about 500 µL/min or less, e.g. 440 µL/min, 100 µL/min or less, e.g. 50 µL/min or less, e.g. 30 µL/min.

A "wash liquid" can be a liquid suitable to wash out, eventually to dissolve, particulate substances, adsorbed matrix components and the like, build-up on the HPLC column head during multiple sample injections cycles. A wash liquid can be a liquid suitable to wash out, eventually to dissolve, eventual traces of samples from the valve-to-detector conduit while still being compatible with the detector used, e.g., with a mass spectrometer. A wash liquid may be the same as or similar to an elution solvent used for chromatography, which depending on the type of column, or type of samples and analytes passed through the column may be different. For example, for analytes for which typically reversed-phase chromatography is used, suitable solvents may be organic solvents like methanol, acetonitrile, tetrahydrofuran, and/or isopropylic alcohol. These solvents may be also mixed with each other and/or with water. Acidic or basic additives may be added to adjust the pH. Typical additives can include formic acid, ammonium formate, ammonium acetate, etc. For example, for analytes for which typically normal-phase chromatography is used, suitable solvents may include solvents like hexane, heptane mixed with polar organic solvents such as ethyl acetate, chloroform or 2-propanol. The wash liquid may be the same or different for backflushing an HPLC column and for washing the conduit between the downstream valve and the ionization source respectively, depending on the HPLC column.

According to an embodiment, the at least one diluent for diluting the at least one concentrated composition and the wash liquid are the same liquid.

For the purpose of this disclosure and in connection to backflushing, the term "HPLC" encompasses for simplicity also UHPLC or other high-performance column like µ-LC and small-bore columns, distinguished from rapid trap and elute LC columns, and which is typically not subject to backflushing during an analytical run and for which it is typically required to manually intervene by disconnecting the column, reversing the flow direction by reconnecting the column in reversed orientation, and directing the flow to waste and not to the detector in order to backflush it for the only purpose to clean the column.

The term "valve" refers to a flow-regulating device to control, redirect, restrict or stop flow and, in particular, to an LC switching valve, that is a multi-port valve that controls flow between elements connected to the ports. This is typically achieved by moving one or more valve conduits to switch communication between different elements. Elements may be fluidically connected to the ports via further conduits, like pipes, tubes, capillaries, microfluidic channels and the like, and by fittings like screws/nuts and ferrules, or alternative liquid-tight seals, e.g., maintained in place by a clamp mechanism. An LC switching valve is normally capable of allowing liquid pressures in the order of magnitude used for HPLC or higher.

In particular, the "downstream valve" is an LC switching valve located downstream with respect to the analytical fluidic system in the normal direction of flow through a fluidic stream towards the ionization source. The downstream valve may comprise a port for each fluidic stream, a port for the conduit leading to the ionization source, one or more downstream-pump ports and one or more waste ports.

According to an embodiment, the downstream valve has an inner valve conduit(s) with an inner diameter of less than 0.6 mm, typically between about 0.5 mm and 0.2 mm, more typically about 0.4 mm, and even more typically about 0.25 mm. The inner valve conduit can have however any other diameter in typically used ranges.

According to an embodiment, the downstream valve has a typical switching time of about 500 ms or less. The switching time can be however also longer than 500 ms.

According to an embodiment, the downstream pump is connected to the downstream valve via a wash selection valve, where the wash selection valve is configured to alternately connect to any one of the at least one fluidic stream and to the conduit leading to the ionization source via the downstream valve.

A "wash selection valve" is an LC switching valve located between the downstream pump and the downstream valve, and comprising a downstream-pump inlet port, one wash outlet port for each fluidic stream to be backflushed, where the fluidic connection between the outlet port and the respective fluidic stream is via the downstream valve, and eventually one wash outlet port connectable to the valve-to-detector conduit via the downstream valve.

According to an embodiment, the wash selection valve is connectable to the at least one fluidic stream via a respective three-way valve fluidically connected to the downstream valve, the three-way valve comprising a wash-selection-valve inlet port, a downstream-valve outlet port and a waste outlet port.

The term "concentrated composition", as used herein, relates to a mixture of compounds selectively chosen for their particular suitability in calibrating a mass spectrometer and having a respective concentration that is higher than the final concentration obtained after dilution and as used for calibration. In an embodiment, the composition comprises the indicated compounds, in a further embodiment, the composition essentially consists of the indicated compounds, in a further embodiment, the composition consists of the indicated compounds. In an embodiment, the composition is a liquid composition, in a further embodiment, the composition is liquid under standard conditions.

The term "diluted composition" refers to the composition which is obtained by automatically mixing at least one concentrated composition with at least one diluent in order to obtain the final concentration of each compound in the composition that is required for calibrating the mass spectrometer.

As used herein, the term "standard conditions", if not otherwise noted, relates to IUPAC standard ambient temperature and pressure (SATP) conditions, i.e. in an embodiment, a temperature of 25°C and an absolute pressure of 100 kPa; also in an embodiment, standard conditions include a pH of 7. Moreover, if not otherwise indicated, the term "about" relates to the indicated value with the commonly accepted technical precision in the relevant field, in an embodiment relates to the indicated value ± 20%, in a further embodiment ± 10%, in a further embodiment ± 5%. Further, the term "essentially" indicates that deviations having influence on the indicated result or use are absent, i.e. potential deviations do not cause the indicated result to deviate by more than ± 20%, in a further embodiment ± 10%, in a further embodiment ± 5%. Thus, "consisting essentially of' means including the components specified but excluding other components except for materials present as impurities, unavoidable materials present as a result of processes used to provide the components, and components added for a purpose other than achieving the technical effect of the invention. For example, a composition defined using the phrase "consisting essentially of' encompasses any known acceptable additive, excipient, diluent, carrier, and the like. In an embodiment, a composition consisting essentially of a set of components will comprise less than 5% by weight, in a further embodiment less than 3% by weight, in a further embodiment less than 1% by weight, in a further embodiment less than 0.1% by weight of non-specified component(s).

According to an embodiment, the at least one concentrated composition comprises (i) cesium iodide, (ii) ethylamine and/or formic acid, and (iii) methanol and/or water and optionally (iv) cyclosporine A and/or 5-(4-hydroxyphenyl)-5-phenylhydantoin and/or ammonium formate.

According to an embodiment, in the at least one concentrated composition:
(i) cesium iodide has a concentration from 0.1 µg/mL to 100 mg/mL;
(ii) ethylamine, if present, has a concentration from 0.01 µg/mL to 1 mg/mL, and formic acid, if present, has a concentration from 0.001% (v/v) to 10% (v/v)
(iii) cyclosporine A, if present, has a concentration from 0.01 µg/mL to 1000 µg/mL, 5-(4-hydroxyphenyl)-5-phenylhydantoin, if present, has a concentration from 0.01 µg/mL to 1000 µg/mL, ammonium formate, if present, has a concentration from 0.01 mM to 1 M;
(iv) a polar solvent such as methanol, water, or a mixture thereof is added to 100%; According to an embodiment, the at least one diluted composition is obtained by mixing the at least one concentrated composition with the at least one diluent with a ratio from 1:99 to 99:1, typically 1:99 to 20:80, e.g. 10:90.

The term "polar solvent" is understood by the skilled person. Preferably, the term relates to a solvent or mixture of solvents having a dipole moment of at least 1.5 D, preferably at least 1.7 D. Typically, the polar solvent is methanol, water, ethanol, acetonitrile, n-propanol, isopropanol, or a mixture of any combination of at least two of the aforesaid polar solvents. More typically, the polar solvent is methanol, water, or a mixture thereof.

According to an embodiment, in the at least one concentrated composition: the concentration of cesium iodide is 500 µg/mL, the concentration of ethylamine, if present, is 10 µg/mL, the concentration of formic acid, if present, is 1% (v/v), the concentration of methanol is 30% (v/v) and water is added to 100%.

According to an embodiment, the at least one concentrated composition comprises cesium iodide, ethylamine, formic acid, methanol, and water.

According to an embodiment, the at least one diluent is any of methanol, acetonitrile, ethanol, propanol, isopropanol or a combination of any ones thereof.

According to an embodiment, the at least one diluted composition is obtained by mixing the at least one concentrated composition with a combination of methanol and acetonitrile as diluent, the respective ratio being 10:45:45 such as to obtain a dilution factor of 10:90.

In an embodiment, the composition comprises the indicated components at the concentrations specified herein. Unless otherwise indicated, a polar solvent, e.g. methanol, water, or a mixture thereof is added to 100%. In an embodiment, methanol is comprised in the composition at indicated concentration and water is added to 100%; thus, in an embodiment, any share in the composition not accounted for is water. As is understood by the skilled person, the term "concentration of X is to 100%" relates to an addition of compound X in an amount to provide for a volume required for the other compounds of the composition to have the desired concentrations. Thus, compound X added to 100% typically is a liquid, in an embodiment water or methanol, in a further embodiment is water. In an embodiment, the purity of the components of the composition is independently selected from at least 90%, in an embodiment at least 95%, in a further embodiment at least 98%, in a further embodiment at least 99%, at least 99.5%, in a further embodiment at least 99.9%.

The term "calibration" is used herein in a broad sense in concurrence with typical use by the skilled person. Thus, the term calibration includes an operation which establishes under specified conditions a relation between quantity values obtained with measurement standards and corresponding quantity values of a calibrated instrument, i.e. a calibration stricto sensu. Calibration may, however, also be verification of measurement values. The term calibration further includes measures of adjusting or re-adjusting the calibrated instrument or its output in order to concur with the aforesaid quantity values obtained with measurement standards, i.e. calibration in its usual, broader sense. Thus, calibration may in particular be mass axis check (MAC) and/or mass axis adjustment (MAA), in mass spectrometry. In an embodiment, the composition is a universal calibration solution for positive ion mode and for negative ion mode MS. In an embodiment, in case the calibration composition comprises at least ethylamine, formic acid, and cesium iodide, and at least one of methanol and water, the m/z values of the main signals are, in positive ion mode: 46, 133, 393, 653, 912, 1172, 1432, 1692, and/or 1952, in an embodiment are 46.066, 132.905, 392.715, 652.524, 912.334, 1172.144, 1431.953, 1691.763, and/or 1951.572, and in negative ion mode: 45, 127, 387, 647, 906, 1166, 1426, 1686, and/or 1946, in an embodiment 44.998, 126.905, 386.714, 646.524, 906.333, 1166.143, 1425.953, 1685.762, and/or 1945.572. In an embodiment, the composition further comprises at least one of cyclosporine A, 5-(4-Hydroxyphenyl)-5-phenylhydantoin, and ammonium formate, and m/z values of resulting additional ions are 601.921, 1202.841, 1219.841, 1224.841, 1334.751, and 269.0848 in positive ion mode, and 267.0848 and 1200.841 in negative ion mode. Thus, in an embodiment, calibration is calibration in the m/z range of from 46 to 1952 in positive ion mode, and/or is calibration in the m/z range of from 45 to 1946 in positive ion mode.

Advantageously, it was found in the work underlying the present disclosure that the compositions described herein are useful as universal calibration solutions in mass spectrometry suitable for use in positive as well as negative ion mode, providing the option to calibrate over a broad range of m/z values, and providing a suitable number of calibration points over the whole range. Moreover, the solution is stable even at temperatures, which are typical with the use of mass spectrometers, for at least one year.

In an embodiment, calibration comprises performing a mass axis check (MAC), i.e. is verifying that the mass axis is correctly adjusted. Said mass axis check, in an embodiment, comprises assessing a mass spectrum of a diluted composition as specified herein and verifying that for any one or more or all of the m/z ratios indicated above signals are obtained within a predetermined reference range. In case the m/z ratios are obtained within said predetermined range, the method may indicate that mass axis check was passed successfully, in an embodiment followed by termination of the method. In case at least one of the m/z ratios is not obtained within said predetermined range, the method may indicate that mass axis check failed; in such case, the method may continue to perform steps of mass axis adjustment as specified herein below.

In an embodiment, calibration comprises performing a mass axis adjustment (MAA), i.e. is adjusting or re-adjusting at least one parameter of the mass spectrometer such that the m/z values measured for any one or more or all of the m/z ratios indicated above, are obtained within a predetermined reference range. The parameters adjustable to achieve the aforesaid mass axis adjustment are known to the skilled person and may include hardware and software / settings adjustments / tuning, like adjusting RF DAC (Radio-Frequency Digital-To-Analog Converter), DC (direct current) and voltage values, and the like, eventually including adjustment of ion source parameters.

In particular, in case of failure or anticipation of failure of the mass axis check and/or mass axis adjustment, based on the assessment of the mass spectrum of the at least one diluted composition, the controller may be further configured to execute any one or more actions selected from adapting the dilution factor of the at least one concentrated composition, adjusting one or more mass spec acquisition parameters, executing a maintenance procedure, before repeating the mass axis check and/or mass axis adjustment.

Reasons for possible failure of the mass axis check and/or mass axis adjustment may be due to performance limitations of the downstream pump (typically lower than an LC pump as mentioned above), with a mixing ratio accuracy that can be about +/- 5% and a mixing ratio precision that can be about +/- 30 %, thus resulting in a variable signal intensity that can can vary between about 30 % and about 200 % across different analytical systems. Variations in signal and signal intensity can be also due to chemical degradation and/or aging of the components in the calibration solution, and contaminations of the mass spectrometer components, aging or partial clogging of the downstream pump components including mixing unit, capillaries, valves, and the like. Contamination of above mentioned parts may introduce interferences which ultimately can suppress or interfere with the signal, where the degree of suppression and interference may vary for different compounds in the calibration solution because of their different physiochemical properties leading to different ionization efficiencies. Sufficient signal intensity within the dynamic range of the mass spectrometer, i.e. detectable signal distinguished from background noise but without saturation (i.e. not too high and not too low) is required across the broad m/z range for successful mass axis check and mass axis adj ustment.

The term "assessing or assessment of a mass spectrum" is understood by the skilled person. In an embodiment, the term relates to determining a correlation plot of a semi-quantitative or quantitative measure of one or more signals obtained from a sample or the at least one diluted composition by the mass spectrometer with the m/z value of the ions causing said signals. A graphical representation of a mass spectrum or m/z spectrum may be provided e.g. as a centroid graph and/or as a continuum graph. The m/z spectrum may be a full scan spectrum obtained by scanning across the m/z measurable range of the mass spectrometer or a partial scan spectrum obtained by scanning across a selected m/z range within the m/z measurable range. In particular, multiple full or partial m/z scan data may be repeatedly obtained, at intervals or continuously, in any given time frame, by running an m/z scan after the other. In particular, mass spectrum parameters may include any one or more of shape or area of one or more m/z peaks, signal/noise ratio, m/z peak height, ratio of m/z peak heights, background signal intensity, m/z value of peak maximum, m/z mass position, presence of one or more unexpected m/z peaks, and height of the one or more unexpected m/z peaks.

As conditions leading to failure may be cumulative, that is progressing over time, and as such progress can be monitored every time that a mass axis check and/or mass axis adjustment is executed, a failure of mass axis check and/or mass axis adjustment can be anticipated. So even in case of non-failure of a mass axis check and/or mass axis adjustment because the mass spectrum parameters are still within a reference range, any of the herein mentioned actions may be scheduled before the next or a later mass axis check and/or mass axis adjustment in order to prevent an otherwise anticipated failure.

"Adapting the dilution factor of the at least one concentrated composition" means changing the mixing ratio between the at least one concentrated composition and the at least one diluent, e.g. by either increasing or reducing the dilution factor, e.g. from 10:90 to 5:95 or 15:85 or 20:80, such that with the newly obtained concentration of the compounds in the diluted composition any one or more respective signals which, upon determination of the mass spectrum, resulted either too low or too high with respect to a reference range or dynamic range, would fall within the range at the next spectrum determination. Changing the mixing ratio may also include changing the concentrated composition if more than one is available, e.g. with a different combination of compounds and/or at least in part different concentration of the same compounds, and/or changing the at least one diluent or relative mixing ratio.

The term "adjusting mass spec acquisition parameters" may refer to adjusting the sensitivity of the mass spectrometer such as to increase or reduce signal intensity, overall signal intensity across the spectrum or even for individual peaks/signals, or adjusting the m/z range, adjusting selection of parent molecular ions and relative collision-induced fragmentation, adjusting ion source parameters that contribute to a change of the acquisition parameters such as curtain gas pressure, make-up flow conditions, voltages, and the like.

The term "maintenance procedure" to an ionization source (IS) and or mass spectrometer (MS) maintenance procedure, that is a procedure intended to resolve a root cause of a technical issue in the ionization source and/or mass spectrometer respectively that is responsible for the failed mass axis check and/or mass axis adjustment. Possible root causes may be clogging or accumulation of contaminants in the ionization source and/or mass spectrometer, such as analytes and matrix components leading to decreased performance of the analytical system. According to an embodiment, the IS and/or MS maintenance procedure is any one or more of an IS cleaning procedure, an IS and/or MS bake-out procedure, and an intervention procedure.

An "IS cleaning procedure" refers to an automatically initiated and executed cleaning procedure of the ionization source comprising liquid infusion into the ionization source. Liquid infusion may comprise purging through the sprayer needle by increased flow, e.g., up to 1 or even several mL/min. It may optionally further comprise increasing temperature and/or gas pressure and/or changing the applied electric potential.

An "IS and/or MS bake-out procedure" refers to an automatically initiated and executed procedure comprising increasing the temperature of the IS or IS parts and/or MS parts, particularly metal parts, e.g., up to temperatures of 200°C, in order to accelerate desorption kinetics of eventual adsorbates. Heating may be additionally advantageous for more quickly reestablishing a condition of vacuum, e.g., pressure conditions up to 10-10 mbar, after venting.

An "intervention procedure" refers to a semiautomatic procedure comprising manual cleaning and/or repairing and/or replacing of the IS or IS parts and/or of MS parts, and comprising automated reducing of the IS and/or MS temperature before manual intervention, and automated increasing of the IS and/or MS temperature after manual intervention, and/or automated reducing or removing of a vacuum condition in the IS and/or MS before manual intervention and automated reestablishment of the vacuum condition in the IS and/or MS after manual intervention. In this way, manual steps are reduced to a minimum and the process is greatly simplified. In addition, the manual intervention time is reduced to a minimum, since the system is automatically prepared for manual intervention and automatically returns to an operational status after manual intervention.

According to certain embodiments, the IS and/or MS maintenance procedure further comprises any one or more of automated increasing of gas flow, e.g., curtain gas, in order to reduce the IS and/or MS temperature, automated disconnection of the IS and/or MS from power supply, e.g., before manual intervention and eventual automated reconnection after manual intervention, automated enablement/disablement of manual access to the IS and/or MS by automated interlock activation/deactivation, and automated changing of a vacuum condition in the IS and/or mass spectrometer.

An automated analytical method including use of a mass spectrometer is herein also disclosed, the method comprising connecting a downstream pump to an ionization source coupled to the mass spectrometer via a downstream valve arranged downstream of an analytical fluidic system, where the downstream pump is fluidically connected to a plurality of fluid containers comprising respective fluids, the fluids comprising at least one concentrated composition for calibrating the mass spectrometer and at least one diluent for diluting the at least one concentrated composition. The method further comprises controlling the downstream pump in order to obtain at least one diluted composition by automatically mixing at least one concentrated composition with at least one diluent with a predetermined dilution factor, infusing the at least one diluted composition into the ionization source, obtaining a mass spectrum of the at least one diluted composition, executing a calibration of the mass spectrometer based on an assessment of the mass spectrum.

According to an embodiment, executing the calibration comprises checking a mass axis and/or adjusting a mass axis.

According to an embodiment, in case of failure or anticipation of failure of the mass axis check and/or mass axis adjustment, based on the assessment of the mass spectrum of the at least one diluted composition, the method comprises executing any one or more actions selected from adapting the dilution factor of the at least one composition, adjusting one or more mass spec acquisition parameters, executing a maintenance procedure, before repeating the mass axis check and/or mass axis adjustment.

According to an embodiment, the method comprises controlling the downstream pump and the downstream valve to connect to the ionization source between two consecutive fluidic streams of the analytical fluidic system in order to wash liquid from a previous fluidic stream out of a conduit between the downstream valve and the ionization source with a wash liquid before liquid from a subsequent fluidic stream enters the conduit.

According to an embodiment, the method comprises controlling the downstream pump and the downstream valve to connect to at least one fluidic stream of the analytical fluidic system comprising an HPLC column in order to backflush and thereby clean the HPLC column with a wash liquid.

According to an embodiment, the method comprises connecting the downstream pump to the downstream valve via a wash selection valve, and alternately connecting the wash selection valve to any one of the at least one fluidic stream and to the ionization source via the downstream valve.

According to an embodiment, the method comprises connecting the wash selection valve to the at least one fluidic stream via a respective three-way valve fluidically connected to the downstream valve, the three-way valve comprising a wash-selection-valve inlet port, a downstream-valve outlet port and a waste outlet port.

According to an embodiment, the method comprises automatically backflushing the at least one HPLC column at regular intervals and/or upon detection of a pressure rise above a predetermined threshold in the at least one fluidic stream and/or upon detection of performance reduction below a predetermined threshold, by e.g. monitoring data like increase of signal background, shifts in analyte retention times, peak shape alteration and the like during use of the at least one HPLC column

According to an embodiment, the method comprises automatically managing by a controller a fluidic-stream-to-mass-spectrometer connection time, that is the connection time between the at least one fluidic stream and the ionization source, a downstream-pump-to-mass-spectrometer connection time, that is the connection time between the downstream pump and the ionization source, and a downstream-pump-to-fluidic-stream connection time, that is the connection time between the at least one fluidic stream and the downstream pump, by controlling switching of any one or more valves including the downstream valve, the wash selection valve, the three-way valve(s).

According to an embodiment, the method comprises fixing the fluidic-stream-to-mass-spectrometer connection time, e.g. of the same duration for each fluidic stream, and when the downstream pump is used to wash liquid from a previous fluidic stream out of a conduit between the downstream valve and the ionization source, the method may comprise fixing also the downstream-pump-to-mass-spectrometer connection time, and to be a fraction of the fluidic-stream-to-mass-spectrometer connection time, thereby resulting at least temporarily in a continuous switching at a regular pace.

Other and further objects, features and advantages will appear from the following description of exemplary embodiments in combination with the drawings and the accompanying claims. It is noted that the scope of the claims is defined by the recitations therein and not by the specific discussion of features and advantages set forth in the present description.

### Brief Description of the Drawings

The following detailed description of the embodiments of the present disclosure can be best understood when read in conjunction with the following drawings, where like structure is indicated with like reference numerals and in which:
FIG. 1 schematically shows an analytical system and an analytical method comprising using a downstream pump for calibrating a mass spectrometer.
FIG. 2 schematically shows further details of the method of FIG. 1 in case of failure or anticipation of failure of calibration according to an embodiment.
FIG. 3 schematically shows a further embodiment of the analytic system and analytical method of FIG. 1 with the downstream pump having a further function.
FIG. 4 schematically shows a yet further embodiment of the analytic system and analytical method of FIG. 1 with the downstream pump having yet a further function.

Skilled artisans appreciate that elements in the figures are illustrated for simplicity and clarity and have not necessarily been drawn to scale. For example, the dimensions of some of the elements in the figures may be exaggerated relative to other elements to help improve understanding of the embodiments of the present disclosure.

### Detailed Description

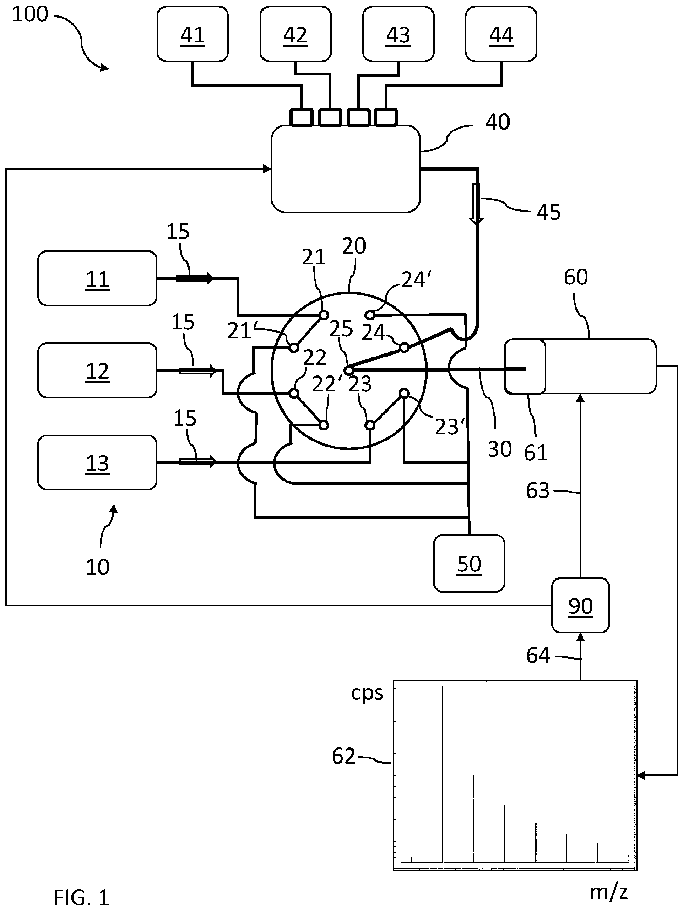

FIG. 1 shows a schematic example of analytical system 100 comprising a mass spectrometer 60 and an ionization source 61 coupled to the mass spectrometer 60, an analytical fluidic system 10 connectable to the ionization source via a downstream valve 20 for infusing samples into the mass spectrometer 60 via the ionization source 61, a downstream pump 40 fluidically connectable to the ionization source 61 via the downstream valve 20, where the downstream pump 40 is fluidically connected to a plurality of fluid containers comprising respective fluids 41, 42, 43, 44, the fluids comprising at least one concentrated composition 44 for calibrating the mass spectrometer 60 and at least one diluent 42, 43 for diluting the at least one concentrated composition 44. The analytical system 100 further comprises a controller 90 configured to control the downstream pump 40 in order to obtain at least one diluted composition 45 by automatically mixing at least one concentrated composition 44 with at least one diluent 42, 43 with a predetermined dilution factor, to infuse the at least one diluted composition 45 into the ionization source 61, to obtain a mass spectrum 62 of the at least one diluted composition 45 and to execute a calibration 63 of the mass spectrometer 60 based on an assessment 64 of the mass spectrum 62.

In particular, the analytical fluidic system 10 comprises a plurality of fluidic streams 11, 12, 13, whereas the downstream valve 20 comprises in this case a fluidic-stream port 21, 22, 23 for each fluidic stream 11, 12, 13 respectively and a waste port 21', 22', 23' for each fluidic stream 11, 12, 13 respectively, leading to a waste 50. The downstream valve 20 comprises in addition a valve-to-ionization-source port 25, connected to a conduit 30 leading to the ionization source 61 and alternately connectable to each of the fluidic stream 11, 12, 13 via the fluidic-stream ports 21, 22, 23 respectively. In particular, the downstream valve 20 further comprises a downstream-pump-inlet port 24 also connectable to the conduit 30 via the valve-to-ionization-source port 25 and a downstream-pump-waste port 24' leading to the waste 50 when connected to the downstream-pump-inlet port 24. It is clear that this is only an example and the number of ports and connections may be adapted according to the need and according to the number of fluidic streams.

In this example, the downstream pump 40 is controlled by the controller 90 to infuse the diluted composition 45 into the ionization source 61 at a flow rate similar to the flow rate 15 of the fluidic streams 11, 12, 13, e.g. about 500 µL/min or less, e.g. 440 µL/min, e.g. about 100 µL/min or less, e.g. 50 µL/min or less, e.g. 30 µL/min.

FIG. 1 also schematically shows an automated analytical method including use of a mass spectrometer 60, the method comprising connecting a downstream pump 40 to an ionization source 61 coupled to the mass spectrometer 60 via a downstream valve 20 arranged downstream of an analytical fluidic system 10, where the downstream pump 40 is fluidically connected to a plurality of fluid containers comprising respective fluids 41, 42, 43, 44, the fluids comprising at least one concentrated composition 44 for calibrating the mass spectrometer 60 and at least one diluent 42, 43 for diluting the at least one concentrated composition 44. The method further comprises controlling the downstream pump 40 in order to obtain at least one diluted composition 45 by automatically mixing at least one concentrated composition 44 with at least one diluent 42, 43 with a predetermined dilution factor, infusing the at least one diluted composition 45 into the ionization source 61, obtaining a mass spectrum 62 of the at least one diluted composition 45, executing a calibration 63 of the mass spectrometer 60 based on an assessment 64 of the mass spectrum 62.

In this example, calibration includes a mass axis check and/or a mass axis adjustment; the concentrated composition 44 comprises for example cesium iodide, ethylamine, formic acid, methanol, and water, at 10-fold the required concentration, and the diluted composition 45 is obtained by mixing the concentrated composition 44 with for example a combination of methanol and acetonitrile as diluents 42, 43 the respective ratio being for example 10 (concentrated composition): 45 (methanol): 45 (acetonitrile) such as to obtain a dilution factor of 10:90, i.e. a 10-fold dilution.

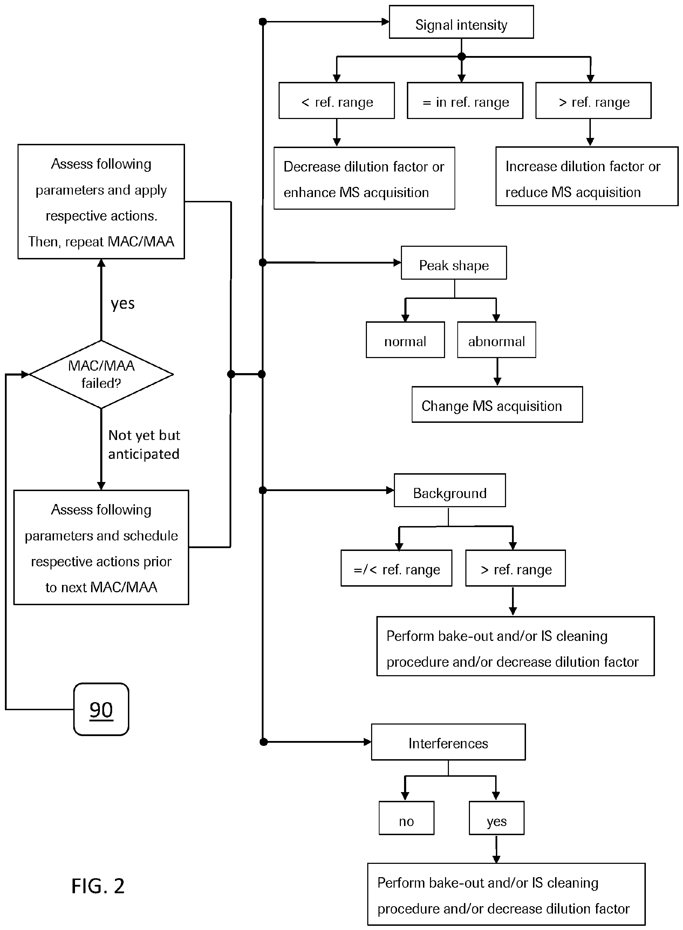

FIG. 2 schematically shows further details of the analytical system 100 and method of FIG. 1 in case of failure or anticipation of failure of the mass axis check (MAC) and/or mass axis adjustment (MAA), based on the assessment 64 of the mass spectrum 62 of the diluted composition 45. In particular, with reference to FIG. 2, the controller 90 is further configured to execute any one or more actions selected from adapting the dilution factor of the concentrated composition, adjusting one or more mass spec (MS) acquisition parameters, executing a maintenance procedure, such as a bake-out and/or IS cleaning procedure, before repeating the mass axis check (MAC) and/or mass axis adjustment (MAA). In particular, the method may comprise assessing parameters of the mass spectrum such as signal intensity, peak shape, background and presence of interferences. For example, in case of signal intensity below a reference range, e.g. for at least one or more peaks, e.g. for the highest m/z clusters, e.g. cesium iodide clusters, which tend to have a lower signal intensity versus more abundant m/z clusters, the action may comprise decreasing the dilution factor, such as to obtain a less diluted calibration solution, or enhancing the MS acquisition parameters, such as to increase the detector sensitivity, for individual m/z values or ranges or for the entire spectrum. On the other hand, in case of a signal intensity above a reference range, e.g. in case of signal saturation, e.g. for the most abundant clusters, the action may comprise increasing the dilution factor, such as to obtain a more diluted calibration solution, or reducing the MS acquisition parameters, such as to decrease the detector sensitivity, for individual m/z values or ranges or for the entire spectrum. Analogously, in case of abnormal peak shapes the action may comprise changing the MS acquisition parameters, either enhancing or reducing, accordingly. In case of background signal above a reference range, the action may comprise a bake-out and/or IS cleaning procedure and/or decreasing the dilution factor, such as to obtain a higher signal to noise ratio. Similarly, in presence of interferences, the action may comprise a bake-out and/or IS cleaning procedure and/or decreasing the dilution factor, such as to enhance the relative signal of the calibration solution components versus the signal of the interferences.

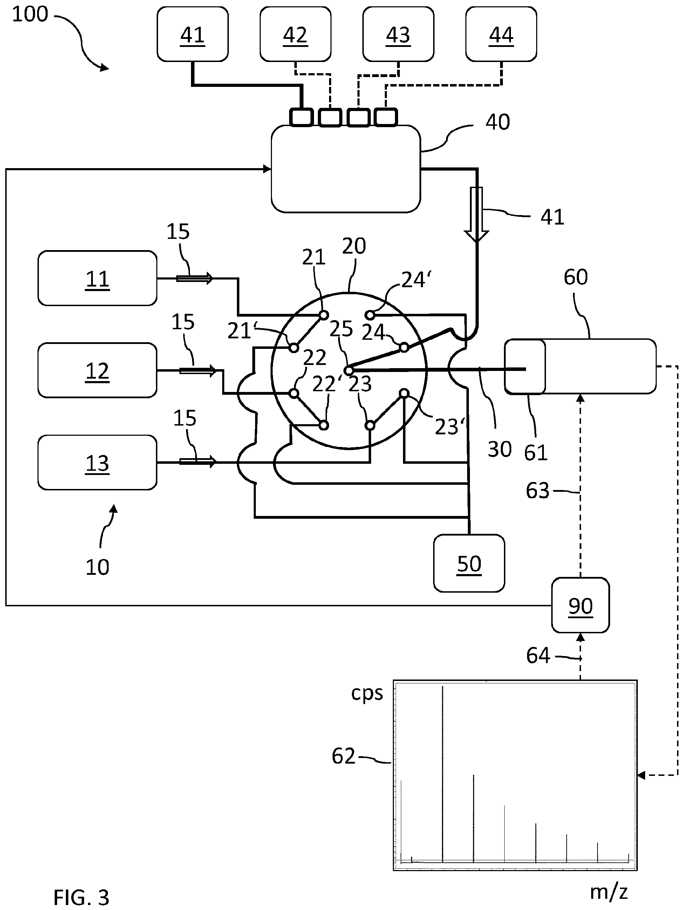

FIG. 3 schematically shows a further embodiment of the analytic system 100 and analytical method of FIG. 1 with the downstream pump 40 having a further function besides the function of providing the at least one diluted composition described in connection to FIG. 1 (represented in dashed lines in FIG. 3). In particular, at least one fluid container comprises at least one wash liquid 41, and the controller 90 is further configured to control the downstream pump 40 and the downstream valve 20 to connect to the ionization source 61 between two consecutive fluidic streams 11,12; 12,13; 13,11 in order to wash liquid from a previous fluidic stream out of the conduit 30 between the downstream valve 20 and the ionization source 61 with the wash liquid 41 before liquid from a subsequent fluidic stream enters the conduit 30.

Thus, the method comprises alternately connecting a plurality of fluidic streams 11, 12, 13 to the conduit 30 via the downstream valve 20 and connecting the downstream pump 40 to the conduit 30 between two consecutive fluidic streams 11,12; 12,13; 13,11 via the downstream valve 20 in order to wash liquid from a previous fluidic stream out of the conduit 30 before liquid from a subsequent fluidic stream enters the conduit 30.

The at least one wash liquid 41 can be for example water, acetonitrile, methanol, tetrahydrofuran or isopropylic alcohol, which may be pumped individually or mixed with each other in any combination and ratio, depending, e.g., on the LC conditions, on the type of samples and/or analytes flowing in between and on the desired washing effect. According to an embodiment, the at least one diluent 42, 43 for diluting the at least one concentrated composition 44 can be used as wash liquid and/or mixed with another wash liquid 41.

In this case, the downstream pump 40 can be controlled by the controller 90 to pump the wash liquid through the conduit 30 at a flow rate higher than the flow rate 15 of the fluidic streams 11, 12, 13.

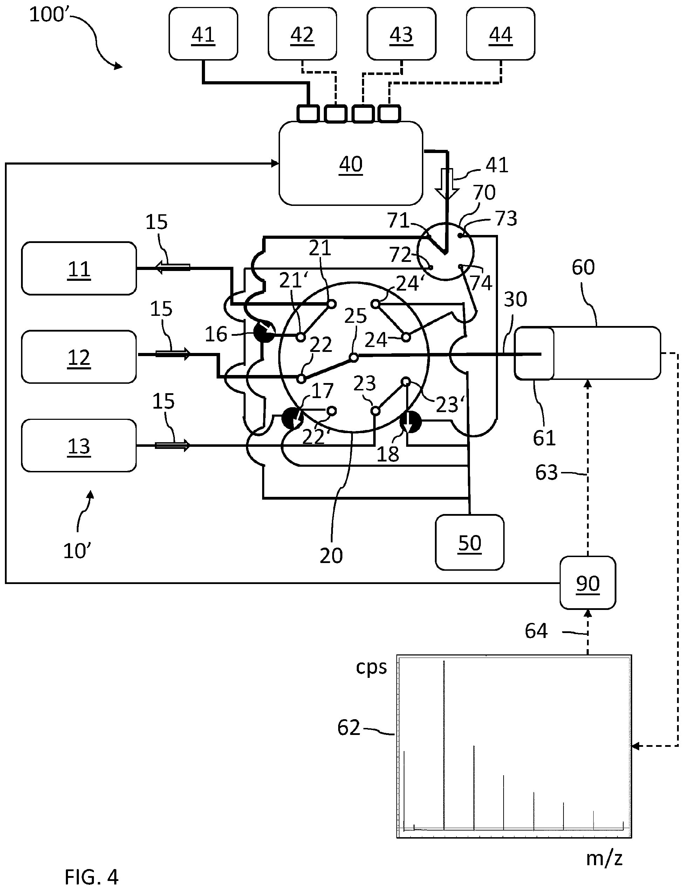

FIG. 4 schematically shows analytic system 100' that is yet another variant of the analytic system 100 and analytical method of FIG. 1 and FIG. 3 with the downstream pump 40 having yet a further function. In particular, the analytical fluidic system 10' comprises at least one fluidic stream 11, 12, 13 comprising an HPLC column, and at least one fluid container comprises a wash liquid 41, as in the embodiment of FIG. 3. The controller 90 is here further configured to control the downstream pump 40 and the downstream valve 20 to connect to the at least one fluidic stream 11, 12, 13 in order to backflush and thereby clean the at least one HPLC column with the wash liquid 41. More particularly, the downstream pump 40 is connected to the downstream valve 20 via a wash selection valve 70. The wash selection valve 70 is configured to alternately connect the downstream pump 40 to any one of the fluidic streams 11, 12, 13 and to the conduit 30 via the downstream valve 20. In particular, the wash selection valve 70 is connectable to the fluidic streams 11, 12, 13 via respective fluidic stream wash ports 71, 72, 73 leading to respective three-way valves 16, 17, 18 fluidically connected to the downstream valve 20, via downstream-pump-inlet ports 21', 22', 23' that are also the waste ports 21', 22', 23', the three-way valves 16, 17, 18 each comprising a wash-selection-valve inlet port, a downstream-valve outlet port and a waste outlet port leading to the waste 50. The wash selection valve 70 further comprises a valve-to-conduit-wash port 74 connected to the downstream valve 20 via the downstream-pump-inlet port 24 for connecting to the conduit 30. In the example shown in FIG. 4, the wash selection valve 70, the downstream valve 20 and the three-way valve 16 are switched such that the downstream pump 40 is connected via the fluidic stream wash port 71, the three-way valve 16, the downstream-pump-inlet port 21' and the fluidic-stream port 21 to the fluidic stream 11, in order to backflush and thereby clean the fluidic streams 11 with the at least one wash liquid 41. At the same time, the fluidic stream 12 is connected to the conduit 30 via fluidic-stream port 22 and valve-to-ionization-source port 25, whereas the fluidic stream 13 is directed to waste 50 via fluidic-stream port 23, waste port 23' and three-way valve 18 respectively. It is to be noticed that the direction of flow 15 for the fluidic stream 11 is inverted with respect to the regular direction of flow, as shown in FIG. 1 and FIG. 3. The analytical system 100' may comprise other valves (not shown), e.g. one or more upstream valves, upstream of the fluidic streams 11, 12, 13 enabling e.g. exit and waste of the wash fluid in backflush mode.

The controller 90 may be configured to automatically backflush the HPLC columns of the respective fluidic streams 11, 12, 13 at regular intervals and/or upon detection of a pressure rise above a predetermined threshold in the at least one fluidic stream and/or upon detection of performance reduction of the HPLC columns below a predetermined threshold.

The controller 90 may be configured to manage a fluidic-stream-to-mass-spectrometer connection time, that is the connection time between the at least one fluidic stream 11, 12, 13 and the ionization source 61, a downstream-pump-to-mass-spectrometer connection time, that is the connection time between the downstream pump 40 and the ionization source 61, and a downstream-pump-to-fluidic-stream connection time, that is the connection time between the at least one fluidic stream 11, 12, 13 and the downstream pump 40, by controlling switching of any one or more valves including the downstream valve 20, the wash selection valve 70 and the three-way valves 16, 17, 18.

In the preceding specification, numerous specific details are set forth in order to provide a thorough understanding of the present disclosure. It will be apparent, however, to one having ordinary skill in the art, that the specific details need not be employed to practice the present teaching. In other instances, well-known materials or methods have not been described in detail in order to avoid obscuring the present disclosure.

Particularly, modifications and variations of the disclosed embodiments are certainly possible in light of the above description. It is therefore to be understood, that within the scope of the appended claims, the invention may be practiced otherwise than as specifically devised in the above examples.

Reference throughout the preceding specification to "one embodiment", "an embodiment", "one example" or "an example", "one aspect" or "an aspect" means that a particular feature, structure or characteristic described in connection with the embodiment or example or aspect is included in at least one embodiment. Thus, appearances of the phrases "in one embodiment", "in an embodiment", "one example" or "an example", "one aspect" or "an aspect" in various places throughout this specification are not necessarily all referring to the same embodiment or example or aspect.

Furthermore, the particular features, structures, or characteristics may be combined in any suitable combinations and / or sub-combinations in one or more embodiments or examples or aspects.

## Claims

1. An analytical system (100, 100') comprising
- a mass spectrometer (60) and an ionization source (61) coupled to the mass spectrometer (60),
- an analytical fluidic system (10, 10') connectable to the ionization source (61) via a downstream valve (20) for infusing samples into the mass spectrometer (60) via the ionization source (61),
- a downstream pump (40) fluidically connectable to the ionization source (61) via the downstream valve (20), wherein the downstream pump (40) is fluidically connected to a plurality of fluid containers comprising respective fluids (41, 42, 43, 44), the fluids comprising at least one concentrated composition (44) for calibrating the mass spectrometer (60) and at least one diluent (42, 43) for diluting the at least one concentrated composition (44),
- a controller (90) configured to control the downstream pump (40) in order to obtain at least one diluted composition (45) by automatically mixing at least one concentrated composition (44) with at least one diluent (42, 43) with a predetermined dilution factor, to infuse the at least one diluted composition (45) into the ionization source (61), to obtain a mass spectrum (62) of the at least one diluted composition (45) and to execute a calibration (63) of the mass spectrometer (60) based on an assessment (64) of the mass spectrum (62).

2. The analytical system (100, 100') according to claim 1 wherein the calibration includes a mass axis check and/or a mass axis adjustment.

3. The analytical system (100, 100') according to claim 2 wherein in case of failure or anticipation of failure of the mass axis check and/or mass axis adjustment, based on the assessment (64) of the mass spectrum (62) of the at least one diluted composition (45), the controller (90) may be further configured to execute any one or more actions selected from adapting the dilution factor of the at least one concentrated composition, adjusting one or more mass spec acquisition parameters, executing a maintenance procedure, before repeating the mass axis check and/or mass axis adjustment.

4. The analytical system (100, 100') according to any of the preceding claims wherein the at least one concentrated composition (44) comprises (i) cesium iodide, optionally (ii) ethylamine and/or formic acid, (iii) a polar solvent, in an embodiment methanol and/or water and optionally (iv) cyclosporine A and/or 5-(4-hydroxyphenyl)-5-phenylhydantoin and/or ammonium formate, and wherein the at least one diluent is any of methanol, acetonitrile, ethanol, propanol, isopropanol or a combination of any ones thereof.

5. The analytical system (100, 100') according to claim 3 wherein in the at least one concentrated composition (44):
(i) cesium iodide has a concentration from 0.1 µg/mL to 100 mg/mL;
(ii) ethylamine, if present, has a concentration from 0.01 µg/mL to 1 mg/mL, and formic acid, if present, has a concentration from 0.001% (v/v) to 10% (v/v)
(iii) cyclosporine A, if present, has a concentration from 0.01 µg/mL to 1000 µg/mL, 5-(4-hydroxyphenyl)-5-phenylhydantoin, if present, has a concentration from 0.01 µg/mL to 1000 µg/mL, ammonium formate, if present, has a concentration from 0.01 mM to 1 M;
(iv) a polar solvent, in an embodiment methanol, water, or a mixture thereof is added to 100%.

6. The analytical system (100, 100') according to any of the preceding claims wherein the at least one diluent (42, 43) is any of methanol, acetonitrile, ethanol, propanol, isopropanol or a combination of any ones thereof.

7. The analytical system (100) according to any of the preceding claims wherein the analytical fluidic system (10) comprises a plurality of fluidic streams (11, 12, 13), wherein at least one fluid container comprises a wash liquid (41), and wherein the controller (90) is further configured to control the downstream pump (40) and the downstream valve (20) to connect to the ionization source (61) between two consecutive fluidic streams in order to wash liquid from a previous fluidic stream out of a conduit (30) between the downstream valve (20) and the ionization source (61) with the wash liquid (41) before liquid from a subsequent fluidic stream enters the conduit (30).

8. The analytical system (100') according to any of the preceding claims wherein the analytical fluidic system (10') comprises at least one fluidic stream (11, 12, 13) comprising an HPLC column, wherein at least one fluid container comprises a wash liquid (41), and wherein the controller (90) is further configured to control the downstream pump (40) and the downstream valve (20) to connect to the at least one fluidic stream (11, 12, 13) in order to backflush and thereby clean the at least one HPLC column with the wash liquid (41).

9. An automated analytical method including use of a mass spectrometer (60), the method comprising
- connecting a downstream pump (40) to an ionization source (61) coupled to the mass spectrometer (60) via a downstream valve (20) arranged downstream of an analytical fluidic system (10), wherein the downstream pump (40) is fluidically connected to a plurality of fluid containers comprising respective fluids (41, 42, 43, 44), the fluids comprising at least one concentrated composition (44) for calibrating the mass spectrometer (60) and at least one diluent (42, 43) for diluting the at least one concentrated composition (44),
- controlling the downstream pump (40) in order to obtain at least one diluted composition (45) by automatically mixing at least one concentrated composition (44) with at least one diluent (42, 43) with a predetermined dilution factor,
- infusing the at least one diluted composition (45) into the ionization source (61),
- obtaining a mass spectrum (62) of the at least one diluted composition (45),
- executing a calibration (63) of the mass spectrometer (60) based on an assessment (64) of the mass spectrum (62).

10. The automated method according to claim 9 wherein executing the calibration (63) comprises checking a mass axis and/or adjusting a mass axis.

11. The automated method according to claim 10 wherein, in case of failure or anticipation of failure of the mass axis check and/or mass axis adjustment, based on the assessment (64) of the mass spectrum (62) of the at least one diluted composition (45), the method comprises executing any one or more actions selected from adapting the dilution factor of the at least one composition, adjusting one or more mass spec acquisition parameters, executing a maintenance procedure, before repeating the mass axis check and/or mass axis adjustment.

12. The automated method according to any of the claims 9 to 11 wherein the at least one concentrated composition (44) comprises (i) cesium iodide, optionally (ii) ethylamine and/or formic acid, (iii) methanol and/or water and optionally (iv) cyclosporine A and/or 5-(4-hydroxyphenyl)-5-phenylhydantoin and/or ammonium formate, and wherein the at least one diluent is any of methanol, acetonitrile, ethanol, propanol, isopropanol or a combination of any ones thereof.

13. The automated method according to claim 11 wherein in the at least one concentrated composition (44):
(i) cesium iodide has a concentration from 0.1 µg/mL to 100 mg/mL;
(ii) ethylamine, if present, has a concentration from 0.01 µg/mL to 1 mg/mL, and formic acid, if present, has a concentration from 0.001% (v/v) to 10% (v/v)
(iii) cyclosporine A, if present, has a concentration from 0.01 µg/mL to 1000 µg/mL, 5-(4-hydroxyphenyl)-5-phenylhydantoin, if present, has a concentration from 0.01 µg/mL to 1000 µg/mL, ammonium formate, if present, has a concentration from 0.01 mM to 1 M;
(iv) methanol, water, or a mixture thereof is added to 100%;

14. The automated method according to any of the claims 9 to 12 comprising controlling the downstream pump (40) and the downstream valve (20) to connect to the ionization source (61) between two consecutive fluidic streams of the analytical fluidic system (10) in order to wash liquid from a previous fluidic stream out of a conduit (30) between the downstream valve (20) and the ionization source (61) with a wash liquid (41) before liquid from a subsequent fluidic stream enters the conduit (30).

15. The automated method according to any of the claims 9 to 13 comprising controlling the downstream pump (40) and any one or more valves including the downstream valve (20) to connect to at least one fluidic stream (11, 12, 13) of the analytical fluidic system (10) comprising an HPLC column in order to backflush and thereby clean the HPLC column with a wash liquid (41).
